# EUROPEAN PATENT SPECIFICATION

(11) **EP 0 657 277 B1**
(45) Date of publication and mention of the grant of the patent: **26.03.2003**
(21) Application number: 94309128.0
(22) Date of filing: 07.12.1994
(51) Int. Cl.: B32B 7/00, B65D 81/24

(54) **Sheet shaped oxygen absorbing member and method for manufacture thereof**
Sauerstoffabsorbierendes blattförmiges Element und Verfahren zur Herstellung
Elément absorbant l'oxygène en forme de feuille et son procédé de fabrication

(30) Priority: 07.12.1993 JP 30651293
(43) Date of publication of application: 14.06.1995
(73) Proprietor: MITSUBISHI GAS CHEMICAL COMPANY, INC., Tokyo 100-0005 (JP)
(72) Inventor: Takahashi, Hideyuki, c/o Mitsubishi Gas Chem., Katsushika-ku, Tokyo 125 (JP); Hatakeyama, Hidetoshi, c/o Mitsubishi Gas Chem., Katsushika-ku, Tokyo 125 (JP); Nakaya, Futoshi, c/o Mitsubishi Gas Chem., Katsushika-ku, Tokyo 125 (JP)
(74) Representative: Pendlebury, Anthony

(56) References cited:
- EP-A- 0 367 390
- EP-A- 0 466 515
- WO-A-92/12004

## Description

### BACKGROUND OF THE INVENTION

### Field of the Invention

The present invention relates to an oxygen absorbing member having an oxygen absorbing property and formed into a sheet like shape, and a method for manufacture thereof. The oxygen absorbing member can be used in the field of a container storing foodstuffs or pharmaceuticals. Oxygen existing in the container can be removed by securing this oxygen absorbing member in the container, and thus deterioration or oxidization of foodstuffs or pharmaceuticals can be prevented.

### Description of Related Art

In order to maintain quality or freshness of foodstuffs or pharmaceuticals during their storage period, so-called oxygen absorbing packaging, wherein an oxygen absorbing agent is enclosed in the container together with articles to be stored, has been widely used for the purpose of absorbing oxygen existing in a package. This oxygen absorbing packaging may prevent articles from deteriorating due to an influence of oxygen or eroding due to microbes under the existence of oxygen..

Therefore, various packages of articles delivered to general consumers generally contain oxygen absorbing agent.

The oxygen absorbing packaging can be attained by enclosing foodstuffs, pharmaceuticals or the like to be stored in a container having a property of blocking permeation of a gas together with oxygen absorbing member in which oxygen absorbing agent is contained. Generally, this oxygen absorbing member is supplied in a form of a small bag of gas permeable packaging member containing oxygen absorbing composition in granular or powder shape.

In many cases, it is desired that such a small bag of oxygen absorbing agent (sometimes simply referred to as a "small bag") is secured to inside a container. Thereby, an oxygen absorbing agent is prevented from being mixed in and eaten with articles (foodstuff), or being accidentally cooked with articles.

Various methods of securing this small bag are proposed. Generally, small bags are attached to an inner wall surface of packaging members, such as packaging bags or containers (carton, box, etc.) by use of adhesive agent, hot melt agent or pressure sensitive adhesive double coated tapes.

However, it is also difficult, in many cases, to sufficiently secure the small bag to a container by such reasons as surface of the small bag is often uneven and a small bag is swollen. If a small bag is secured to a container by any chance, it is often secured to a container in part, but not entire surface of a small bag.

As a result, an area of a small bag not in contact with the surface of a container creates a gap. Such a gap causes various problems, namely, stored articles is jammed in or hooked at the gap, and thus smooth handling of the articles can be disturbed or a small bag falls off from the container.

Moreover, a conventional oxygen absorbing member using powdery oxygen absorbing composition has a problem in that the powder sprays in the air when it is to be filled in the gas permeable packaging member and thus a part of the powder adhere to the surface of the small bag.

Then, it was proposed to have a container itself have oxygen absorbing property. In the Japanese Patent (Kokoku) Publication No.62-1824 and the Japanese Patent (Kokoku) Publication No.4-6082, manufacturing exterior structure with a film containing an oxygen absorbing agent is disclosed.

However, the oxygen absorbing property in these prior arts has been insufficient. The conventional packaging member has further problems in that since packaging bag or container itself is to be manufactured by using special packaging member, cost of the container increases which leads to an increase in the price of the articles.

In the Japanese Patent Laid-Open Publications Nos. 2-86758, 54-114585, 55-44344, 56-26524, the Japanese Utility Model Laid-Open Publication No. 60-10768, the Japanese Patent Laid-Open Publications Nos. 55-109428 and 55-109428, forming an oxygen absorbing agent in a sheet like shape is disclosed. These prior arts also disclose the prevention of an exposure of a surface of the sheet shaped oxygen absorbing agent by covering the agent by a wrapping material. Thus, direct contact of the oxygen absorbing agent and foodstuff is prevented.

Since the sheet shaped oxygen absorbing agent is not a granule or powder, it is advantageous in that no leakage of granule or powder within the package is threatened to happen due to a destruction of a package, unlike the case of the conventional oxygen absorbing member in a small bag.

When this sheet shaped oxygen absorbing member is attached to a container, the method of cutting the sheet in a predetermined size and then adhering the sheet to a predetermined place of the container by using adhesive agent can be considered. If this method is applied, side edge of the oxygen absorbing layer is exposed to atmosphere when the sheet is cut out. In this case, the above-mentioned direct contact occurs, and it is burdensome to apply adhesive to the sheet so cut out. Moreover, the conventional sheet shaped oxygen absorbing agent has a problem in that its oxygen absorbing property is rather weak.

WO92/12004 discloses an oxygen-absorbing label consisting of a base sheet, adhesive on the base sheet for securing the base sheet to an internal surface of a container, an oxygen-absorbing composition on the base sheet and a cover sheet secured to the base sheet to confine the oxygen-absorbing composition therebetween, the cover sheet being fabricated of material which will permit oxygen to pass therethrough but will not stain due to the oxidation of the oxygen-absorbing composition or due to contact with materials in the container.

EP 0466515 discloses an oxygen scavenger which comprises an oxygen absorbent composition and an oxygen permeable film covering the oxygen absorbent composition and including an asymmetric porous membrane whose outer surface portion in the thickness direction of asymmetric porous membrane is formed as a dense skin layer.

### SUMMARY OF THE INVENTION

Now, the object of the present invention is to provide a sheet shaped oxygen absorbing member wherein oxygen absorbing agent is not exposed to atmosphere, and may be readily adhered to a packaging member.

In addition, another object of the present invention is to provide a sheet shaped oxygen absorbing member with a good oxygen absorbing property.

Yet another object of the present invention is to provide a method for manufacturing such a sheet shaped oxygen absorbing member.

Since the conventional oxygen absorbing member contained in a small bag has the problems explained below, an object of the present invention is to provide a sheet shaped oxygen absorbing member that is not threatened to be destroyed when it is used in a microwave oven.

When a container in which the small bag shape oxygen absorbing member is contained is to be heated in a microwave oven, since the oxygen absorbing agent contains a metal as an oxygen absorbing component, the oxygen absorbing agent may generate heats and sparks, etc. under the influence of the microwave irradiated from the microwave oven and destroys the bag of oxygen absorbing member.

In order to achieve these objectives, the invention according to this application discloses a sheet shaped oxygen absorbing member which has an oxygen absorbing property and is attachable to a packaging member which packages foodstuffs for microwave cooking, comprising:
an oxygen absorbing layer capable of absorbing oxygen within said packaging member and comprising iron powder dispersed in a thermoplastic resin, the resulting mixture being formed thermally into a sheet-like shape;
a gas permeable layer to cover said oxygen absorbing layer;
a base layer supporting said oxygen absorbing layer and said gas permeable layer, said base layer having an adhesive layer for attaching said oxygen absorbing layer and said gas permeable layer to said packaging member, and said gas permeable layer being directly attached to said base layer at the periphery of said oxygen absorbing layer;
characterised in that the sheet comprises a separator layer to which said base layer attaches having said adhesive layer in between, wherein the base layer is capable of being peeled off from said separator layer and being attached to said packaging member by said adhesive layer, said separator layer comprising at least one of a paper on which release agent is applied, resin film and metallic foil, or a combination of any of these and comprising a first adhesive layer and a second adhesive layer, wherein said first adhesive layer attaches the oxygen absorbing layer and the gas permeable layer to the base material, and said second adhesive layer is capable of attaching the base material to the separator layer and the packaging member;
the oxygen absorbing layer has a thickness of 0.1 to 3 mm and is formed by mixing an oxygen absorbing composition comprising an iron powder coated with metal halide and a polyolefin resin, and drawing it to a direction of at least one axis to 1.5 to 15 times the original size, wherein said oxygen absorbing layer has an oxygen absorbing velocity of 100 ml/m² Hr or more at a temperature of 25 °C; and
the sheet shaped oxygen absorbing member is resistant to microwaves during use in a microwave oven.

The sheet shaped oxygen absorbing member further comprises a separator layer to which the base layer attaches having the adhesive layer in between and the base layer is peeled off from the separator layer when the oxygen absorbing member is used.

The oxygen absorbing layer, the gas permeable layer and the base layer are preferably formed to be a self adhesive strip (it may be sometimes called as a "label-like shape"). The separator may be formed into a belt like shape to which a plurality of labels may be continuously attached.

The oxygen absorbing layer is preferably obtained from the sheet shaped oxygen absorbing agent. The oxygen absorbing agent is made of a mixture of an iron-base oxygen absorbing composition and a thermoplastic resin. The base layer may further comprise a base material consisting of at least one of a plastic film, an unwoven cloth or paper. On the surface of the base layer facing the separator layer, necessary notes may be printed.

The oxygen absorbing layer has an oxygen absorbing velocity of 100 ml/m². Hr or more at a temperature of 25°C. The separator layer comprises either paper on which mold release agent is applied, a resin film or metallic foil, or a combination of these.

The thickness of the sheet shaped oxygen absorbing member is preferably in range of 0.1 to 3 mm. The oxygen absorbing layer may also have a lamination of a sheet containing water.

The sheet shaped oxygen absorbing member is manufactured through a method according to claim 9.

According to the present invention, the oxygen absorbing member may easily be attached to the package, such as a packaging bag, a container or other packaging member, by the adhesive layer contained in the base layer. Moreover, since the oxygen absorbing layer is covered by the gas permeable layer not only at the top surface thereof but also at all the side walls in such manner that the gas permeable layer directly attaches to the base layer around the periphery of the oxygen absorbing layer, the oxygen absorbing layer is not exposed when the sheet shaped oxygen absorbing member is attached to the packaging member or a separator layer, discussed later, by the adhesive layer of the base layer.

Furthermore, the sheet shaped oxygen absorbing member further comprises a separator layer to which the base layer is attached having the adhesive layer in between, and thereby the sheet shaped oxygen absorbing member may promptly be attached to the packaging member, such as a container, by simply peeling off a unit of the oxygen absorbing layer, the gas permeable layer and the base layer from the separator layer when the container is filled with the articles or otherwise necessary.

The oxygen absorbing layer, the gas permeable layer and the base layer is preferred to be in a form of a self adhesive strip. If the self adhesive strip is formed in a predetermined size in advance, and the self adhesive strip is peeled off from the separator when necessary, the desired amount of the oxygen absorbing agent may easily be attached to the container.

Furthermore, by forming the separator layer into a belt like shape and continuously attaching a plurality of the self adhesive strips thereon, a structure having a series of oxygen absorbing members located in line can be provided. From such a structure, the self adhesive strips containing a predetermined amounts of oxygen absorbing agent are continuously supplied, therefore the process of attaching the sheet shaped oxygen absorbing member to the container can be continuously performed, and it is also beneficial to automate such process.

The base layer has an adhesive layer to attach the oxygen absorbing layer and the gas permeable layer to the packaging member. Thus, by using this adhesive layer, the oxygen absorbing layer and the gas permeable layer may be attached to the separator layer. After the oxygen absorbing layer, the gas permeable layer and the base layer are peeled off from the separator layer, the oxygen absorbing layer and the gas permeable layer may be attached to the container by an adhesive layer of the base layer in such manner that the gas permeable layer covers the oxygen absorbing layer.

Now, the structure of the sheet shaped oxygen absorbing member according to the present invention is explained in detail.

### Separator Layer:

The separator layer has a function of a supporting member to support the oxygen absorbing layer, the gas permeable layer and the base layer, as well as a function of protecting an adhesive surface of the base layer. When the oxygen absorbing layer, the gas permeable layer and the base layer comprise one unit in a form of a self adhesive strip, the separator layer has a function of a common supporting member for the plurality of the self adhesive strips. The self adhesive strips are peeled off from the separator layer when the oxygen absorbing member needs to be used.

The separator layer comprises paper on which release agent, such as silicon resin or paraffin wax, is applied, film or metallic foil, or a combination of any of these.

The materials to be used for a separator layer are preferred to have strength against machine use so that it may resist the processing conditions for the manufacture of the sheet shaped oxygen absorbing member. Furthermore, a material with such stiffness, shrinkage ratio, hygroscopic property or the like as causing none or little warping or peeling, so that the size of the material does not change during the manufacturing process is properly selected for the separator layer. Paper is generally used. It is also preferred to use a resin film or a metallic foil not creating paper dust, so as to eliminate any possibility of dusts being mixed in foodstuffs.

The release agent will be determined according to the property of the adhesive layer of the base layer, taking into consideration the balance of the adhesiveness and the peelability between the adhesive layer and the separator layer.

### Base Layer:

The base layer has a function of a supporting member to support the oxygen absorbing layer and the gas permeable layer after these layers are peeled off from the separator layer.

The base layer comprises an adhesive layer for attaching the oxygen absorbing layer and the gas permeable layer to the packaging member. When the sheet shaped oxygen absorbing member comprises a separator layer, the adhesive layer is initially attached to the separator layer.

Preferably, the base layer has a base material having shape stability. The adhesive layer consists of a first adhesive layer to attach the oxygen absorbing layer and the gas permeable layer to the base layer, and a second adhesive layer to attach the base member to the separator layer. The oxygen absorbing layer and the gas permeable layer are to be attached to the separator layer or a packaging member placing the base material of the base layer, and the first and second adhesive layer in between.

As discussed above, the adhesive layer of the base layer has a function of attaching the oxygen absorbing layer and the gas permeable layer to the separator layer. The adhesive layer has a further role of securing the oxygen absorbing layer and the gas permeable layer to the container after the base layer supporting the oxygen absorbing layer and the gas permeable layer are peeled off from the separator layer.

As used herein, the term "attach" has a broad meaning of adhering, attaching, securing or sealing two surfaces by various methods, such as various adhesive agent, hot melt agent, heat seal having a property of sealing by heat melt.

The stability of the shape of the oxygen absorbing layer and the gas permeable layer may be enhanced by making the base layer to contain the base material after these layers are peeled off from the separator layer. In other words, when the oxygen absorbing layer and other layers are peeled off from the separator, the base material prevents the oxygen absorbing layer or other layers from curling.

Moreover, the base material has a function of a communication medium. Information, such as characters or figures, may be printed on the surface of the base material to face the separator layer. Such information communicate necessary matters to the consumers. Even after the attachment of the sheet shaped oxygen absorbing member to a container, the consumers may recognize information, such as the name of the article or notice printed on the base material, from outside the container, if the container is transparent. It helps eliminating a process of printing such information on the container. Furthermore, by making the base material or the adhesive layer of the base layer opaque, the oxygen absorbing layer cannot be seen from outside to maintain the fine appearance of the article.

As for a base material, at least one of a plastic film, unwoven cloth, paper or the like is used. The adhesive layers having a function of the adhesive agent are laminated on the both surfaces of the base material by any known methods, such as coating or lamination. Thereby, a preferred form of the base layer is completed. As an adhesive layer, for example, a thermoplastic resin can be used. Preferably, the thermoplastic resin is laminated and then heat sealed on the base material.

### Oxygen Absorbing Layer:

The oxygen absorbing layer comprises an oxygen absorbing agent. A mixture of the oxygen absorbing composition and a resin such as thermoplastic resin is used. By forming such mixture into a sheet like shape, a sheet shaped oxygen absorbing agent is obtained.

The oxygen absorbing layer has an oxygen absorbing velocity of 100 ml/m². Hr or more, or more preferably 200 ml/m². Hr or more at a temperature of 25°C. Thereby, practical usage level of oxygen absorbing velocity can be maintained even in case of so-called one surface absorption, i.e., one surface of the oxygen absorbing layer is attached to a container and another surface of the oxygen absorbing layer absorbs oxygen.

The sheet shaped oxygen absorbing agent according to the present invention include sheet shaped oxygen absorbing agent manufactured by: dispersing oxygen absorbing composition in thermoplastic resin, main ingredient of which is iron powder, Prior art methods include further drawing the oxygen absorbing composition so dispersed (Japanese Patent Laid-Open Publication No.2-72851); treating the thermoplastic resin containing the oxygen absorbing composition to foam (Japanese Patent Laid-Open Publication No.56-26524); dispersing the oxygen absorbing composition in a fiber material, such as pulp containing a thermoplastic resin (Japanese Patent Laid-Open Publication No.2-86758); pressurizing or heating the mixture of the oxygen absorbing composition and the thermoplastic resin powder, or integrating it by pressurizing or heating; coating paper or plastic film with a coating material in which the oxygen absorbing composition are mixed; or dispersing catalyzer containing transition metal, such as cobalt or iron, into a resin, such as polyolefine or polyamide. (A "sheet shaped" may also be expressed as a "film shaped.")

Particularly, the oxygen absorbing layer wherein an oxygen absorbing agent, the main ingredient of which is iron powder, is used, has outstanding oxygen absorbing property. Furthermore, the sheet shaped oxygen absorbing agent wherein a mixture of a polyolefine-base resin, such as polyethylene, and the iron powder-base oxygen absorbing agent is formed into sheet like shape and is further drawn (Japanese Patent Laid-Open Publication No.2-72851), or wherein a mixture of iron powder-base oxygen absorbing composition, a pulp and the polyolefine-base resin or thermoplastic fiber is formed into sheet like shape through thermo compression bonding (Japanese Patent Laid-Open Publication No.2-86758) realizes high oxygen absorbing performance, simplifies manufacturing process and has outstanding resistance against microwave, and thus can be preferably used.

A structure wherein the iron powder-base oxygen absorbing composition is dispersed into the polyolefine-base resin and then is formed into sheet like shape resists the microwave, and thus it is prevented from causing spark or abnormal heating when cooked with foodstuffs in a microwave oven. Thereby, any possibility of leakage of oxygen absorbing composition or other ingredient can be eliminated.

Preferred oxygen absorbing velocity for an oxygen absorbing layer can be achieved by selecting appropriate type of oxygen absorbing agent or composition, type of resin, and content of oxygen absorbing agent or composition. The embodiments discussed later in this application are the examples of realizing such an oxygen absorbing velocity. In addition, such an oxygen absorbing velocity may be realized by using the following prescription.

As an oxygen absorbing agent composition the main ingredient of which is iron powder, the composition comprising iron powder and metal halide is used and such other components, as activated carbon or a filler material which is slightly soluble with water, can be added to the composition when necessary.

The oxygen absorbing composition using the iron powder or a mixture of iron powder and activated carbon, etc., coated with metal halide salt, or iron powder or a mixture of iron powder and activated carbon, etc. wherein metal halide salt is rubbed in on its surface enhances the oxygen absorbing property and thus is used.

The metal halide includes, for example, sodium chloride, potassium chloride, calcium chloride and magnesium chloride.

The smaller parcel size of the oxygen absorbing composition is more preferred. Generally, the particle size of the oxygen absorbing composition is preferred to be 100µm or less, and more preferred to be 50µm or less.

As a thermoplastic resin, for example, low density polyethylene; high density polyethylene; polypropylene; ethylene and α-olefine copolymer; polyamide, such as polymetylpentene; polyester, such as polyethylene terephthalate; and polyorefine fluoride, such as polytetrafluoroethylene are advantageously used. Among these materials, polyolefine resin is particularly preferred from the view point of simplicity of manufacturing process.

After processing the resin composition comprising 15 to 75 weight percent of resin and 30 to 85 weight percent of iron powder-base oxygen absorbing agent into sheet like shape, it is further drawn to at least a direction of one axis. The expansion rate of drawing is preferred to be in range of 1.5 to 10 times to the original size.

The thickness is in range of 0.1 to 3mm. Any appropriate shape of the oxygen absorbing layer may be selected taking into consideration the purpose of use of the member having oxygen absorbing property according to the present invention. Any appropriate size (surface area) of the oxygen absorbing layer may also be selected in the same manner.

Either a water dependent type or self-reactive type of the oxygen absorbing composition may be used. However, a water dependent type which makes use of water evaporated from the subject stored in packaging member is preferred because a moisture supplying agent will not be necessary. Regardless of which type of the oxygen absorbing agent product is used, it is preferred to laminate a sheet containing water on the sheet shaped oxygen absorbing agent to supplement its oxygen absorbability. Furthermore, the oxygen absorbing layer may further contain a composition to grant additional function to it, such as to absorb a gas other than oxygen, generate a desired gas or contain deodorizing agent, or a layer having such function may be laminated on the sheet shaped oxygen absorbing agent.

### Gas Permeable Layer:

The gas permeable layer achieves its roll of preventing the oxygen absorbing layer from directly exposing by coating the oxygen absorbing layer. Moreover, the gas permeable layer has a function of supplying oxygen within the container to the oxygen absorbing layer. The gas permeable layer further has a function to adjust gas permeability and moisture permeability within an appropriate range. The following range is a preferred range of permeability.

The gas permeable layer has oxygen permeability of 10,000 cc/m²· 24Hr· atm or more, or preferably 30,000 cc/m²· 24Hr· atm or more, or more preferably 50, 000 cc/m²· 24Hr· atm or more. The oxygen permeability of 10,000 cc/m²· 24Hr· atm or more is sufficient to prevent the oxygen within the packaging member from causing the oxidation or deterioration of the article.

A material conventionally used to wrap an oxygen absorbing agent may be used as a gas permeable layer. For example, a single layer of a packaging member wherein a perforated film is laminated on one or both surfaces of paper, water resisting unwoven cloth, a microporous film made of polyolefine or synthetic paper or a lamination of such single layer and other material can be used. A packaging member which uses gas permeability on its side edge because the gas permeability of its top surface is low, can also be used.

If the base layer comprises a base material, any of a silicon resin, a fluorocarbon resin or a polymethyl pentene film, or a film of a combination of any of the above, whose heat seal characteristics is weak, may be used as a gas permeable layer, by providing an adhesive layer on the base layer to attach gas permeable layer and the base layer. Furthermore, even if the articles to be stored within the container is liquid or articles of high water content, rust is prevented from eluting from the oxygen absorbing layer by selecting a gas permeable material having resistivity against water, for example non-corrosive property against water or prevention of elusion of water.

Characters or figures may be indicated on the gas permeable layer. In such case, the gas permeable layer is structured with a plurality of layers, and on the outer most layer, transparent and gas permeable layer on which no character is printed is placed. It is so structured so that foodstuffs, etc. within the container has no direct contact with an ink used to print such figures, etc.

The gas permeable layer is attached to the base layer in such manner as to cover the oxygen absorbing layer. At the periphery of the oxygen absorbing layer, the gas permeable layer is directly attached to the base layer without placing the oxygen absorbing layer in between. Therefore, the gas permeable layer prevents side edge of the oxygen absorbing layer from being exposed to atmosphere, which cannot be covered under the prior art. In this regard, the gas permeable layer will be structured having sufficient size to completely cover the top surface and side edge of the oxygen absorbing layer and to have direct contact with the base layer.

The gas permeable layer may be attached to the base layer in such manner as to provide an adhesive layer containing an adhesive agent on the surface of the gas permeable layer to face the separator layer and to attach the adhesive layer to the base layer. In such case, preferably careful attention may be paid so that the adhesive layer does not hinder the gas permeability.

The oxygen absorbing layer, gas permeable layer and base layer are formed to be a self adhesive strip of a restricted size, and each strip is continuously attached to a separator layer in belt like shape to obtain continuous self adhesive strips. Since each layer of the self adhesive strip has a laminated sheet shape, the continuous self adhesive strips may be easily stored in a roll shape by winding it on a drum, etc.

When the self adhesive strip is to be attached to a container, the strips are peeled off from the separator layer one by one by unwinding the roll and are attached to the containers. Each of these processes may be automated by a certain device. The self adhesive strip is preferred to be in a sheet like shape as well as to be thin. Thereby, there is no trouble storing it, and the operation of attaching the self adhesive strips to the containers becomes easier. Moreover, if it is attached to the container, the self adhesive strip will not be obstacle when the container is filled with the stored subject. The thickness of the self adhesive strip is preferably in range of 0.1 to 5mm, and more preferably in range of 0.3 to 3mm.

When the separator layer is wound on a drum, etc., deterioration of the oxygen absorbing property of the self adhesive strip during its storage can be restricted because the gas permeable layer of the self adhesive strip has close contact with the rear surface of the separator of another self adhesive strip.

Any shape of the self adhesive strip, such as square, circle or oval, can be adopted as appropriate.

### Brief Explanation of Drawings

Fig. 1 is a cross section of a continuous self adhesive strip type oxygen absorbing member.

Fig. 2 is a cross section of one embodiment of a self adhesive strip type oxygen absorbing member.

Fig. 3 is a cross section of one embodiment of a self adhesive strip type oxygen absorbing member not according to the invention.

### Detailed Description of embodiments

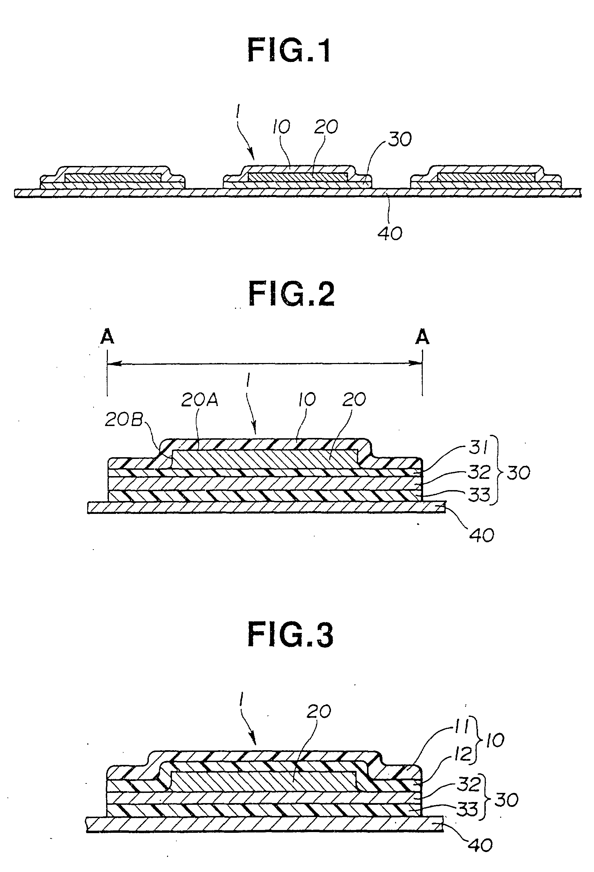

Fig. 1 illustrates the first embodiment of a structure having an oxygen absorbing property. Fig. 1 illustrates a cross section along the longitudinal direction of a separator.

A plurality of a self adhesive strip type oxygen absorbing members 1 are attached on a surface of a belt like shape separator layer comprising release agent coated paper at equal distance. An enlarged view of the self adhesive strip type oxygen absorbing member is shown in Fig. 2.

The self adhesive strip type oxygen absorbing member consists of an oxygen absorbing layer 20 formed into a sheet like shape, a gas permeable layer 10 covering the oxygen absorbing layer, and a base layer 30 causing the oxygen absorbing layer 20 and the gas permeable layer 10 to attach to the separator layer 40.

The base layer consists of a base material 32, a first adhesive layer 31 and a second adhesive layer 33. The first adhesive layer 31 causes an oxygen absorbing layer 20 and a gas permeable layer 10 to attach to the base material 32, and the second adhesive layer 33 causes a base material 32 to attach to the separator layer 40.

According to this structure, the oxygen absorbing layers and the gas permeable layer 10 can be sufficiently attached to the separator layer 40, and at the same time, the base layer 32 supports the layers 10 and 20.

The second adhesive layer 33 may peel off from a separator 40. By attaching the second adhesive layer 33 to a container (not shown), a self adhesive strip type oxygen absorbing member 1 consisting of an oxygen absorbing layer 20, a gas permeable layer 10 and a base layer 30 is secured to a container.

The gas permeable layer 10 is structured to have a surface area greater than that of the oxygen absorbing layer 20. As shown in Figs. 1 and 2, the gas permeable layer 10 covers the surface 20A and the side edge 20B of the oxygen absorbing layer 20, and, at the same time, is directly attached to the first adhesive layer 31 at the periphery of the oxygen absorbing layer.

According to such a structure, the oxygen absorbing layer 20 is prevented from exposing when the self adhesive strip 1 is peeled off from the separator layer 40 and then secured to the packaging member. When this self adhesive strip is attached within the container, oxygen is supplied from the gas permeable layer 10 surface, and is absorbed by an oxygen absorbing agent composition contained in the oxygen absorbing layer.

Fig. 3 illustrates a second embodiment of the oxygen absorbing member. The second embodiment is different from the first embodiment in that the gas permeable layer 10 comprises a first gas permeable layer and an adhesive layer 12 having property of gas permeability, and the gas permeable layer is attached to the base material 32 of the base layer 30 by such an adhesive layer 12. Since such an adhesive layer 12 is provided on the surface of the gas permeable layer, the first adhesive layer 31 as described in the first embodiment is not provided on the base layer.

Examples of the manufacturing method of such an oxygen absorbing agent is now explained.

A first adhesive layer 31 and a second adhesive layer 33 as explained above is formed on respective surface of the base material 32. One surface of the base material is attached to the separator layer 40. Sheet shaped oxygen absorbing layer 20 is attached on another surface of the base material. A gas permeable layer 10 is layered on the oxygen absorbing layer 20 to completely cover the oxygen absorbing layer, and then is pressed towards the base material 32 to completely attach the gas permeable layer on the surface of the base material.

Then, such area of the lamination as shown in A-A in Fig. 2 is punched by using a cutting die to the base layer. Unnecessary portion of the base layer and the gas permeable layer, i.e., outside the A-A area, is peeled off from the separator, and then the self adhesive strip type oxygen absorbing member is obtained.

At this time, since a boundary of the punch locates at the place where the gas permeable layer 10 is directly attached to the base layer 30 on the periphery of the oxygen absorbing layer, oxygen absorbing layer does not expose to atmosphere after punching.

By placing a plurality of self adhesive strips 1 on a separator layer at a predetermined pitch, continuous member of oxygen absorbing members wherein self adhesive strip type oxygen absorbing members are continuously provided on the separator layer can be obtained.

If the fist adhesive layer 31 consists of a heat seal agent, the gas permeable layer 10 and the base material 32 is attached with each other by pressing a predetermined heating jig on the gas permeable layer to fuse the heat seal agent on the periphery of the oxygen absorbing layer 20. If the gas permeable layer 10 comprises an adhesive layer 12, the oxygen absorbing layer 20 is first attached to the adhesive layer 12, and then the oxygen absorbing layer and the gas permeable layer is attached to a base material 32 wherein the separator layer 40 is attached on one surface.

By any of these methods, a structure wherein self adhesive strip type oxygen absorbing members are continuously attached on a belt like shape separator layer 40 can be obtained. Of course, by extending the punch to the separator layer 40, separate self adhesive strip type oxygen absorbing agent composition can be obtained. Such a separate product may also be manufactured by cutting out the series of the products.

Practical examples of manufacturing the sheet shaped oxygen absorbing member and the test results using such a member is now explained.

### (Example 1)

One hundred parts of granular iron-base oxygen absorbing agent, wherein one hundred parts by weight of iron powder (average granular diameter of 70µm) is coated with 3 parts by weight of sodium chloride by using sodium chloride aqueous solution, and 100 parts of polyethylene are mixed and extruded at a temperature of 190°C to form a sheet like shape. This sheet is drawn to the lateral direction to four times the original size, to obtain a sheet shaped oxygen absorbing agent with 1mm thickness. The sheet shaped oxygen absorbing agent so obtained has high absorption performance wherein its oxygen absorbing velocity is 200ml/m². Hr (25°C) or more. An oxygen absorbing layer is formed by cutting the sheet shaped oxygen absorbing agent to a oval shape the size of which is 52mm X 30mm.

Synthetic rubber elastomeric adhesive is applied on one surface of the opal polypropylene film (thickness: 40µm) by using a coater to form an adhesive layer. A silicon coated paper which is release agent coated paper is attached to this surface, and then the same adhesive is applied on another surface of the polypropylene film to obtain a base layer (50 X 100mm) having a separator layer.

A highly gas permeable adhesive sheet (manufactured by Nitto Denko Co., Ltd.), which is a fabric shaped adhesive agent, is attached to water and oil resisting paper. The product thereof is punched out to an oval shape of 64mm X 40mm by using a cutting die to prepare a gas permeable layer.

Oval shaped oxygen absorbing layer is placed on the adhesive surface of the oval shaped gas permeable layer, and these two layers are sealed by compression leaving the oval edge of the gas permeable layer. The oxygen absorbing layer on which the gas permeable layer is sealed by compression is matched with the exposed adhesive surface of the base layer having a separator layer, and they are sealed by compression in such manner that the edge of the gas permeable layer completely attaches to the base layer. Finally, the base layer is punched out, by using a cutting dies, in the oval shape having the same size as the oval shaped gas permeable layer to obtain an oval self adhesive strip type oxygen absorbing member (64mm X 40mm; Thickness: 2mm).

The self adhesive strip type oxygen absorbing member is secured to the inside the three way sealing bag (180 X 250mm) made of a gas barrier film consisting of KON (polyvinylidene chloride coated oriented nylon) (15µm)/PE (polyethylene) (20µm)/LLDPE (linear low density polyethylene) (60µm) by attaching an adhesive surface of the self adhesive strip type oxygen absorbing member appeared by peeling off the separator layer. Boild udon (Japanese flour noodle) 200g is inserted into the bag immediately after the self adhesive strip type oxygen absorbing member is attached to the bag, and the bag opening is heat sealed. Three packages of udon, in which the self adhesive strip type oxygen absorbing member is attached in the same manner, was prepared.

Those three packages of udon was kept in a room a temperature of which was 25°C. Ten days later, the conditions of the udon was observed and the oxygen content within the package was measured by gas chromatograph. Then, the package was opened and held upside down, to see how the udon fell into a pot. The results are shown in the Table 1.

### (Example 2)

The oval self adhesive strip type oxygen absorbing member in size of 60 X 40mm was obtained by the same method as described in the Example 1 except for using water and oil resisting paper without highly gas permeable adhesive sheet as a gas permeable sheet. Using the self adhesive strip type oxygen absorbing agent so obtained, test of storage and opening and withdrawal after storage of udon package was performed. The results are shown in the Table 1.

### (Comparison 1)

In the same manner as described in the Example 1 except for using the oval shape gas permeable layer having the same size as the oxygen absorbing layer (longer diameter: 52mm, shorter diameter 30mm), the gas permeable layer and the oxygen absorbing layer having the same size are layered, and then the oval self adhesive strip type oxygen absorbing member (longer diameter: 52mm, shorter diameter: 30mm) was obtained. The oxygen absorbing layer was exposed on the side edge of the self adhesive strip type oxygen absorbing member so obtained.

Using the oxygen absorbing member so obtained, test of storage and opening and withdrawal after storage of udon packages was performed in the same manner as described in the Example 1. The results are shown in the Table 1.

### (Comparison 2)

A piece of pressure sensitive adhesive double coated tape (manufactured by Nitto Denko Co., Ltd., No. 500) is attached at a center portion of one surface of a commercial oxygen absorbing agent contained in a small bag (manufactured by Mitsubishi Gas Chemical, Co., Ltd., Ageless S-100, a rectangular shape of 50 X 45mm), and then the oxygen absorbing agent contained in a small bag is attached and secured to the inside the gas barrier three way sealing package (180 X 250mm) by the double coated tape. In the same manner as described in the Example 1, test of storage and opening and withdrawal after storage was performed using the package in which the small bag oxygen absorbing member is attached.

### (Comparison 3)

In the same manner as shown in Example 1 except for not using any oxygen absorbing member at all, boiled udon is packed in a gas barrier three way sealing package, and test of storage and opening and withdrawal after storage of the udon package was performed. The results are shown in Table 1.

As apparent from the results shown in the Table 1, the quality of udon was somewhat maintained by the influence of the oxygen absorbing agent in all examples other than the comparison 3 in which no oxygen absorbing agent was used. However, in the comparison 1, rust was generated from iron contained in the oxygen absorbing agent composition and eluted from the side edge of the exposed oxygen absorbing layer. Thereby udon was contaminated. In comparison 2 wherein a conventional oxygen absorbing member in a small bag was used, when udon is released from the package, udon was caught by the oxygen absorbing member, the oxygen absorbing member fell off due to the force of the udon so caught, or other operational inconvenience arose.

From the results shown in the Table 1, the self adhesive strip type oxygen absorbing member according to the present invention can be judged to have outstanding quality maintenance effect and be easy to handle and practical when used.

**Table 1.**

| Sample | | Oxygen Content after 10 days | Condition of udon after 10 days | Condition of release of udon |
|---|---|---|---|---|
| Example 1 | 1 | 0.01% or less | Good quality maintenance | Smoothly fell down |
| | 2 | 0.01% or less | Good quality maintenance | Smoothly fell down |
| | 3 | 0.01% or less | Good quality maintenance | Smoothly fell down |
| Example 2 | 1 | 0.01% or less | Good quality maintenance | Smoothly fell down |
| | 2 | 0.01% or less | Good quality maintenance | Smoothly fell down |
| | 3 | 0.01% or less | Good quality maintenance | Smoothly fell down |
| Comparison 1 | 1 | 0.01% or less | Contaminated with rust | Smoothly fell down |
| | 2 | 0.01% or less | Contaminated with rust | Smoothly fell down |
| | 3 | 0.01% or less | Contaminated with rust | Smoothly fell down |
| Comparison 2 | 1 | 0.01% or less | Good quality maintenance | Caught by oxygen absorbing agent |
| | 2 | 0.01% or less | Good quality maintenance | Oxygen absorbing agent fell down |
| | 3 | 0.01% or less | Few rust spotted | Caught by oxygen absorbing agent |
| Comparison 3 | 1 | 5.23% | Impossible to eat with much mold | Not tested |
| | 2 | 4.77% | Impossible to eat with much mold | Not tested |
| | 3 | 9.10% | Impossible to eat with much mold | Not tested |

### (Example 3)

The same high performance sheet shaped oxygen absorbing agent as used in the Example 1 was punched out in a circular shape in size of 20mmφ by a punch to prepare an oxygen absorbing layer.

Synthetic rubber elastomer-base adhesive agent was applied on the unwoven cloth surface of the base material consisting of an unwoven cloth (50g/m²)/PE (100µm), and a separator layer consisting of silicon resin coated polyethylene film as layered on the adhesive agent surface of the base layer to obtain a base layer with a separator layer. Fluorine (Fluorocarbon)-base water and oil resisting agent (manufactured by Asahi Chemical Industry Co., Ltd., Asahi Guard AG-650) was applied on one surface of HDPE (high density polyethylene) unwoven cloth (manufactured by Dupont, "TYVEK" to form a gas permeable layer, and it was punched out in a circular shape in size of 30mmφ.

Using materials so obtained, a circular self adhesive strip type oxygen absorbing member was manufactured by a sealing machine having a doughnut shaped heating plate (outer diameter: 30mm, inner diameter: 28mm). First of all, a base layer having a separator layer was placed on the sealing table in such manner that the separator layer face the table, a circular shape oxygen absorbing layer (20mmφ) and a gas permeable layer (30mmφ) on the "TYVEK" surface were placed on the base layer in such manner as the center of the circle matches the center of the heating plate, and then the heating plate was pulled down and the HDPE unwoven cloth which is a gas permeable layer and an unwoven cloth on the base layer was heat sealed through PE layer, to obtain a circular self adhesive strip type oxygen absorbing agent (30mmφ).

A glass jar (volume of approximately 170cc) to be covered with a metallic lug cap (diameter: 65mm) with polyvinyl chloride sealer was prepared, and the circular self adhesive strip type oxygen absorbing member was attached at the inner center portion of the lug cap after peeled off from the separator layer. The glass jar was filled with orange juice 150cc, sealed with a lug cap having the self adhesive strip type oxygen absorbing member attached inside, and was stored for seven days at a temperature of 35°C.

After seven days' storage, the oxygen content of the head space of the glass jar containing the orange juice was measured by gas chromatography, and the color and taste of the orange juice was observed, opening the glass jar. The results are shown in Table 2.

### (Comparison 4)

The orange juice storage test was performed in the same manner as described in the Example 3, using the glass jar having a lug cap on which the oxygen absorbing member is not attached. The results are shown in Table 2.

**Table 2**

| Sample | Oxygen Content | Color of Orange Juice | Taste of Orange Juice |
|---|---|---|---|
| Example 3 | 0.01% or less | Good color maintenance | Good taste maintenance |
| Comparison 4 | 6.25% | Significant deterioration | Weak taste, with smell of mold |

### (Example 4)

A long size base layer with a separator layer (width: 40mm, length: 500mm) was prepared in the same manner and using the same material as described in the Example 1. A long size gas permeable layer (width: 40mm, length: 500mm) was prepared in the same manner and using the same material as described in the Example 3.

At the center in the width direction of the exposed adhesive surface of the long size base layer with a separator layer so prepared (width: 40mm, length: 500mm), twelve units of the same circular shaped oxygen absorbing layer as used in the Example 3 (20mmφ) was attached by compression, with a distance of 40mm between each other in its longitudinal direction, leaving 15mm of adhesive surface on both end. The above mentioned long size gas permeable layer was layered on the oxygen absorbing agent layer and the base layer matching the "TYVEK" surface, and is attached by compression so that the gas permeable layer and the base layer were completely attached at the area without the oxygen absorbing layer. Matching the center of a punch (30mmφ) with the center of the circular oxygen absorbing layer, and punching the gas permeable layer and the base layer, leaving only the separator layer. Finally, outside gas permeable layer and the base layer were removed from the lamination material so punched to halfway to the separator layer, to obtain a continuous member of a series of 12 self adhesive strip type oxygen absorbing members wherein circular self adhesive strip type oxygen absorbing agent (30mmφ) is placed on one sheet of silicon coated paper (width: 40mm, length: 500mm).

Continuous member of the self adhesive strip type oxygen absorbing member so obtained was wound on paper tube having 1cm thickness and 1 inch inner diameter, which was attached to the manual label sealing machine operated by manually rotating the rubber made supplying roller (manufactured by Kanebun, Use Touch 303W). Continuous sealing can be performed without any difficulty.

### (Example 5)

The separator layer was peeled off from the self adhesive strip type oxygen absorbing member prepared in the Example 1, and the oxygen absorbing member was secured to the inside of the three way sealing package bag comprising gas barrier film consisting of KON (15µ)/PE(50µ).

The bag in which the self adhesive strip type oxygen absorbing member was attached was filled with 100g of chicken nuggets, and the bag opening was heat sealed.

The chicken nuggets package was kept at the temperature of 10°C and irradiation of 3000 lux fluorescent light.

Ten days later, appearance of the chicken nuggets was observed and the oxygen content within the package was measured by the gas chromatography.

Then, the chicken nuggets package was cooked by irradiation of microwave by a 500W microwave oven (manufactured by Mitsubishi Electric Co., Ltd.) for 90 seconds. Appearance of the self adhesive strip type oxygen absorbing member was observed, and the sensory test of the chicken nuggets was performed. The results are shown in Table 3.

### (Comparison 5)

The chicken nuggets were tested in the same manner as shown in the Example 5 except for securing a commercial small bag shape oxygen absorbing member (manufactured by Mitsubishi Gas Chemical, Co., Ltd., AGELESS S-100), instead of the self adhesive strip type oxygen absorbing member, by using pressure sensitive adhesive double coated tape as in Comparison 2. The results are shown in Table 3.

### (Comparison 6)

The chicken nuggets are tested in the same manner as shown in the Example 5 except for not using any oxygen absorbing agent at all. The results are shown in Table 3.

| | Appearance of Chicken Nuggets after 10 days | Condition of Oxygen Absorbing Agent after Use of Microwave Oven | Results of Sensory Test after use of Microwave Oven |
|---|---|---|---|
| Example 5 | Normal | Normal | Good |
| Comparison 5 | Normal | Small bag was burned, and content was sprayed | Chicken nuggets were contaminated with the contents of the oxygen absorbing agent, and impossible to eat |
| Comparison 6 | Decolored (changed into whitish color) | ― | Oxidized smell, significant deterioration of taste |

The self adhesive strip type oxygen absorbing member may be advantageously used for foodstuffs to be cooked in a microwave oven, without causing spark or destruction of a bag oxygen absorbing agent when cooked in a microwave oven.

The sheet shaped oxygen absorbing member according to the present invention is a lamination wherein an oxygen absorbing layer comprising a sheet shaped oxygen absorbing agent is not exposed to atmosphere, and is a new type of self adhesive strip type one way oxygen absorbing member which can be attached and used by easily peeling off the separator layer.

In the present invention, the characteristics of a sheet shaped oxygen absorbing agent is used in a one way absorbing agent. The sheet shaped oxygen absorbing member has an outstanding oxygen absorbing property, and can be manufactured at lower cost because configuration of material for lamination is reasonable.

Since the sheet shaped oxygen absorbing member has smooth flat surface and is thin, it can be firmly secured when it is used, and gives no feeling of physical disorder, and does not disturb input or output of articles to be packed. Moreover, as opposed to the conventional oxygen absorbing agent contained in a small bag, the sheet shaped oxygen absorbing member can prevent possible dispersion of granular oxygen absorbing agent caused from destruction of a bag, or a possible elution of iron rust, and thus it has outstanding safety and sanitary property. In particular, the sheet shaped oxygen absorbing member has outstanding resistance against micro wave, and thus can be used in a micro wave oven. The form of the. sheet shaped oxygen absorbing member according to the present invention may be suited for a form of a packaging container or a purpose of use. It is also possible to print a notice on the sheet shaped oxygen absorbing member so that the notice is visible from outside the container.

According to the present invention, the continuous manufacturing process of the sheet shaped oxygen absorbing member can be readily attained, which enables commercial production. According to the sheet shaped oxygen absorbing member according to the present invention, the entire process, from peeling off of the separator layer to the attachment of the member to a container can be mechanically performed by using various types of label attaching machine, either manual or automatic, and thus contributing to the labor saving for oxygen absorbing packaging operation.

Therefore, the sheet shaped oxygen absorbing member according to the present invention is a completely new type of oxygen absorbing agent having many features, which can be applied in the broad area.

## Claims

1. A sheet shaped oxygen absorbing member (1) which has an oxygen absorbing property and is attachable to a packaging member which packages foodstuffs for microwave cooking, comprising:
an oxygen absorbing layer (20) capable of absorbing oxygen within said packaging member and comprising iron powder dispersed in a thermoplastic resin, the resulting mixture being formed thermally into a sheet-like shape;
a gas permeable layer (10) to cover said oxygen absorbing layer;
a base layer (30) supporting said oxygen absorbing layer and said gas permeable layer, said base layer having an adhesive layer (33) for attaching said oxygen absorbing layer and said gas permeable layer to said packaging member, and said gas permeable layer being directly attached to said base layer at the periphery of said oxygen absorbing layer;
**characterised in that**:
the sheet comprises a separator layer (40) to which said base layer attaches having said adhesive layer (33) in between, wherein the base layer is capable of being peeled off from said separator layer and being attached to said packaging member by said adhesive layer, said separator layer comprising at least one of a paper on which release agent is applied, resin film and metallic foil, or a combination of any of these and comprising a first adhesive layer (31) and a second adhesive layer (33), wherein said first adhesive layer attaches the oxygen absorbing layer and the gas permeable layer to the base material, and said second adhesive layer is capable of attaching the base material to the separator layer and the packaging member;
the oxygen absorbing layer has a thickness of 0.1 to 3 mm and is formed by mixing an oxygen absorbing composition comprising an iron powder coated with metal halide and a polyolefin resin, and drawing it to a direction of at least one axis to 1.5 to 10 times the original size, wherein said oxygen absorbing layer has an oxygen absorbing velocity of 100 ml/m² • Hr or more at a temperature of 25 °C; and
the sheet shaped oxygen absorbing member is resistant to microwaves during use in a microwave oven.

2. A sheet shaped oxygen absorbing member according to claim 1, wherein said oxygen absorbing layer, said gas permeable layer and said base layer are formed into a self adhesive strip.

3. A sheet shaped oxygen absorbing member according to claim 2, wherein said separator layer is formed in a belt like shape, and a plurality of said self adhesive strips are continuously attached to the separator layer.

4. A sheet shaped oxygen absorbing member according to any one of claims 1 to 3, wherein said base layer further comprises a base material having a shape stability.

5. A sheet shaped oxygen absorbing member according to any one of claims 1 to 4, wherein necessary notice is printed on the surface of the base material to face the separator layer.

6. A sheet shaped oxygen absorbing member according to claim 5, wherein said drawn sheet has micro pores.

7. A sheet shaped oxygen absorbing member according to any preceding claim, wherein said gas permeable layer has oxygen permeability of 10,000cc/m²·24Hr·atm or more, or preferably 30,000cc/m²·24Hr·atm or more, or more preferably 50,000cc/m²·24Hr ·atm or more.

8. A sheet shaped oxigen absorbing member according to claim 1, where a sheet containing water is layered on said oxygen absorbing layer.

9. A method for manufacturing a sheet shaped oxygen absorbing member (1) as defined in claim 1 which has an oxygen absorbing property, is attachable to a packaging member which packages foodstuffs for microwave cooking, and is resistant to microwaves during use in a microwave oven, the method comprising:
a first step of dispersing iron powder coated with metal halide salt in a polyolefin resin, thermally forming the resulting mixture into a sheet-like shape and drawing it to a direction of at least one axis to 1.5 to 10 times the original size to provide an oxygen absorbing layer (20);
a second step of locating a gas permeable layer (10) to cover the oxygen absorbing layer;
a third step of locating said oxygen absorbing layer and gas permeable layer on a separator layer (40) placing a base layer (30) containing two adhesive layers (31, 33) in between;
a fourth step of punching said oxygen absorbing layer, gas permeable layer and base layer in a self-adhesive strip form, placing the boundary at the area where said gas permeable sheet has direct contact with said base layer; and
a fifth step of removing areas that are not punched.

## Patentansprüche

1. Blattförmiges, Sauerstoff absorbierendes Organ (1), welches eine Sauerstoff absorbierende Eigenschaft besitzt und an einem Verpackungsteil befestigt werden kann, das zur Verpackung von Nahrungsmitteln zum Mikrowellenkochen dient, welches aufweist:
eine Sauerstoff absorbierende Schicht (20) zum Absorbieren von Sauerstoff innerhalb des Verpackungsteils, die in einem thermoplastischen Harz dispergiertes Eisenpulver enthält, wobei die erhaltene Mischung thermisch in eine blattartige Form gebracht ist;
eine gasdurchlässige Schicht (10) zum Abdecken der Sauerstoff absorbierenden Schicht;
eine Basisschicht (30) zur Unterstützung der Sauerstoff absorbierenden Schicht und der gasdurchlässigen Schicht, wobei die Basisschicht eine Klebstoffschicht (33) zur Befestigung der Sauerstoff absorbierenden Schicht und der gasdurchlässigen Schicht an dem Verpackungsteil aufweist und die gasdurchlässige Schicht am Umfang der Sauerstoff absorbierenden Schicht direkt an der Basisschicht befestigt ist;
**dadurch gekennzeichnet, dass**
das Blatt eine Trennschicht (40) aufweist, an der die Basisschicht mit einer dazwischenliegenden Klebstoffschicht (33) befestigt ist, wobei die Basisschicht von der Trennschicht abgezogen und an dem Verpackungsteil durch die Klebstoffschicht befestigt werden kann, die Trennschicht wenigstens aus einem Papier, auf das ein Freigabemittel aufgebracht ist, einem Harzfilm oder einer Metallfolie oder einer Kombination beliebiger dieser Schichten, besteht sowie eine erste Klebstoffschicht (31) und eine zweite Klebstoffschicht (33) umfasst, wobei die erste Klebstoffschicht die Sauerstoff absorbierende Schicht und die gasdurchlässige Schicht am Basismaterial befestigt und die zweite Klebstoffschicht zur Befestigung des Basismaterials an der Trennschicht und dem Verpackungsteil geeignet ist;
die Sauerstoff absorbierende Schicht eine Dicke von 0,1 bis 3 mm besitzt und hergestellt ist durch Mischen einer Sauerstoff absorbierenden Zusammensetzung, die aus Eisenpulver, beschichtet mit Metallhalogenid, und einem Polyolefinharz besteht und verstreckt ist in einer Richtung wenigstens einer Achse auf das 1,5- bis 10-fache der ursprünglichen Größe, wobei die Sauerstoff absorbierende Schicht eine Sauerstoffabsorptionsgeschwindigkeit von 100 ml/m²·h oder darüber bei einer Temperatur von 25°C besitzt;
und dass das blattförmige Sauerstoff absorbierende Organ bei der Benutzung in einem Mikrowellenofen gegen Mikrowellen beständig ist.

2. Blattförmiges Sauerstoff absorbierendes Organ nach Anspruch 1, bei dem die Sauerstoff absorbierende Schicht, die gasdurchlässige Schicht und die Basisschicht zu einem selbstklebenden Streifen gebildet sind.

3. Blattförmiges Sauerstoff absorbierendes Organ nach Anspruch 2, bei dem die Trennschicht in eine bandartige Form gebracht ist und eine Anzahl der selbstklebenden Streifen fortlaufend an der Trennschicht angebracht ist.

4. Blattförmiges Sauerstoff absorbierendes Organ nach einem der Ansprüche 1 bis 3, bei dem die Basisschicht ferner aus einem Basismaterial mit Formstabilität besteht.

5. Blattförmiges Sauerstoff absorbierendes Organ nach einem der Ansprüche 1 bis 4, bei dem erforderliche Information auf die Oberfläche des Basismaterials gegenüber der Trennschicht aufgedruckt ist.

6. Blattförmiges Sauerstoff absorbierendes Organ nach Anspruch 5, bei dem das verstreckte Blatt Mikroporen enthält.

7. Blattförmiges Sauerstoff absorbierendes Organ nach einem der vorangehenden Ansprüche, bei dem die gasdurchlässige Schicht eine Sauerstoffdurchlässigkeit von 10000cm³/m²·24h·at oder darüber besitzt, oder vorzugsweise 30000cm³/m²·24h·at oder darüber oder noch mehr bevorzugt 50000cm³/m²·24h·at oder darüber.

8. Blattförmiges Sauerstoff absorbierendes Organ nach Anspruch 1, bei dem ein Wasser enthaltendes Blatt auf die Sauerstoff absorbierende Schicht aufgelegt ist.

9. Verfahren zur Herstellung eines blattförmigen Sauerstoff absorbierenden Organs (1) nach Anspruch 1, das eine Sauerstoff absorbierende Eigenschaft besitzt, an einem Verpackungsteil angebracht werden kann, welches der Verpackung von Nahrungsmitteln für das Mikrowellenkochen dient, und bei der Verwendung in einem Mikrowellenofen gegen Mikrowellen beständig ist, wobei das Verfahren umfasst:
einen ersten Schritt des Dispergierens von Eisenpulver, beschichtet mit Metallhalogenidsalz, in ein Polyolefinharz, thermisches Formen der erhaltenen Mischung in Blattform und Verstrecken derselben in einer Richtung von wenigstens einer Achse auf das 1,5- bis 10-fache der ursprünglichen Größe, um eine Sauerstoff absorbierende Schicht (20) zu bilden;
einen zweiten Schritt des Anbringens einer gasdurchlässigen Schicht (10) zur Abdeckung der Sauerstoff absorbierenden Schicht;
einen dritten Schritt des Anbringens der Sauerstoff absorbierenden Schicht und der gasdurchlässigen Schicht auf einer Trennschicht (40) und Einbringen einer Basisschicht (30), die zwei Klebstoffschichten (31,33) enthält, dazwischen;
einen vierten Schritt des Ausstanzens der Sauerstoff absorbierenden Schicht, gasdurchlässigen Schicht und Basisschicht in eine selbstklebende Streifenform, Anordnen der Begrenzung in dem Bereich, in welchem die gasdurchlässige Schicht direkte Berührung mit der Basisschicht hat; und
einen fünften Schritt des Beseitigens von Bereichen, die nicht ausgestanzt sind.

## Revendications

1. Elément absorbant l'oxygène en forme de feuille (1) qui a des propriétés d'absorption d'oxygène et peut être fixé à un élément d'emballage qui emballe des produits alimentaires pour une cuisson par micro-ondes comprenant :
une couche absorbant l'oxygène (20) apte à absorber l'oxygène dans l'élément d'emballage et comprenant de la poudre de fer dispersée dans une résine thermoplastique, le mélange résultant étant formé thermiquement en une feuille ;
une couche perméable aux gaz (10) pour recouvrir la couche absorbant l'oxygène ;
une couche de base (30) supportant la couche absorbant l'oxygène et la couche perméable aux gaz, la couche de base comportant une couche adhésive (33) pour fixer la couche absorbant l'oxygène et la couche perméable aux gaz à l'élément d'emballage, et la couche perméable aux gaz étant directement fixée à la couche de base à la périphérie de la couche absorbant l'oxygène ;
**caractérisé en ce que** :
la feuille comprend une couche de séparation (40) à laquelle la couche de base se fixe, la couche adhésive (33) étant comprise entre elles, dans lequel la couche de base peut être décollée de la couche de séparation et être fixée à l'élément d'emballage par la couche adhésive, la couche de séparation comprenant au moins du papier sur lequel un agent de libération est appliqué, un film de résine et une feuille métallique, ou une combinaison de ces éléments et comprenant une première couche adhésive (31) et une seconde couche adhésive (33), la première couche adhésive se fixant à la couche absorbant l'oxygène et à la couche perméable aux gaz au matériau de base, et la seconde couche adhésive pouvant se fixer au matériau de base de la couche de séparation et à l'élément d'emballage ;
la couche absorbant l'oxygène a une épaisseur de 0,1 à 3 mm et est formée en mélangeant une composition absorbant l'oxygène comprenant une poudre de fer revêtue d'un halogénure métallique et une résine polyoléfine, et en l'étirant dans la direction d'au moins un axe de 1,5 à 10 fois la dimension d'origine, dans lequel la couche absorbant l'oxygène a une vitesse d'absorption d'oxygène de 100 ml/m².H ou plus à une température de 25°C ; et
l'élément d'absorption d'oxygène en forme de feuille résiste aux micro-ondes pendant une utilisation dans un four à micro-ondes.

2. Elément d'absorption d'oxygène en forme de feuille selon la revendication 1, dans lequel la couche absorbant l'oxygène, la couche perméable aux gaz et la couche de base sont formées en une bande autoadhésive.

3. Elément d'absorption d'oxygène en forme de feuille selon la revendication 2, dans lequel la couche de séparation est formée en forme de bande et plusieurs bandes autoadhésives sont continûment fixées à la couche de séparation.

4. Elément d'absorption d'oxygène en forme de feuille selon l'une quelconque des revendications 1 à 3, dans lequel la couche de base comprend en outre un matériau de base ayant une stabilité de forme.

5. Elément d'absorption d'oxygène en forme de feuille selon l'une quelconque des revendications 1 à 4, dans lequel une information nécessaire est imprimée sur la surface du matériau de base tournée vers la couche de séparation.

6. Elément d'absorption d'oxygène en forme de feuille selon la revendication 5, dans lequel la feuille étirée comporte des micropores.

7. Elément d'absorption d'oxygène en forme de feuille selon l'une quelconque des revendications précédentes, dans lequel la couche perméable aux gaz a une perméabilité à l'oxygène de 10000 cm³/m².24H.atm ou plus, ou de préférence 30000 cm³/m².24H.atm ou plus, ou encore de préférence 50000 cm³/m².24H.atm ou plus.

8. Elément d'absorption d'oxygène en forme de feuille selon la revendication 1, dans lequel une feuille contenant de l'eau est mise en couche sur la couche absorbant l'oxygène.

9. Procédé de fabrication d'un élément absorbant l'oxygène en forme de feuille (1) tel que défini dans la revendication 1, qui a des propriétés d'absorption d'oxygène, peut être fixé à un élément d'emballage qui emballe des produits alimentaires pour une cuisson aux micro-ondes, et est résistant aux micro-ondes en cours d'utilisation dans un four à micro-ondes, ce procédé comprenant :
une première étape de dispersion de poudre de fer revêtue d'un sel d'halogénure métallique dans une résine polyoléfine, la formation thermique du mélange résultant en forme de feuille, et l'étirement dans la direction d'au moins un axe jusqu'à 1,5 à 10 fois la dimension originale pour fournir une couche absorbant l'oxygène (20) ;
une seconde étape de placement d'une couche perméable aux gaz (10) pour recouvrir la couche absorbant l'oxygène ;
une troisième étape de placement de la couche absorbant l'oxygène et de la couche perméable aux gaz sur une couche de séparation (40) en plaçant une couche de base (30) contenant deux couches adhésives (31, 33) entre elles ;
une quatrième étape de découpe de la couche absorbant l'oxygène, de la couche perméable aux gaz et de la couche de base en forme de bande autoadhésive, en plaçant la frontière dans la zone où la couche perméable aux gaz est en contact direct avec la couche de base ; et
une cinquième étape de suppression des zones qui ne sont pas découpées.
